Europäisches Patentamt

European Patent Office

Office européen des brevets

(19)

(11) Veröffentlichungsnummer: **0 147 589 B1**

(12) **EUROPÄISCHE PATENTSCHRIFT**

(45) Veröffentlichungstag der Patentschrift:
**28.12.88**

(51) Int. Cl.⁴: **F 16 K 11/16, B 60 T 15/02**

(21) Anmeldenummer: **84113564.3**

(22) Anmeldetag: **09.11.84**

(54) **Kraftgesteuertes Druckregelventil.**

(30) Priorität: **09.11.83 DE 3340525**

(43) Veröffentlichungstag der Anmeldung:
**10.07.85 Patentblatt 85/28**

(45) Bekanntmachung des Hinweises auf die Patenterteilung:
**28.12.88 Patentblatt 88/52**

(84) Benannte Vertragsstaaten:
**AT BE CH DE FR GB IT LI LU NL SE**

(56) Entgegenhaltungen:
**DE-A- 2 251 663**
**DE-A- 3 049 110**
**GB-A- 1 256 496**
**US-A- 2 955 616**
**US-A- 3 328 092**

(73) Patentinhaber: **Scholz, Joachim Dipl.-Ing. VDI, An der Ziegelei 14, D-7551 Bischweler (DE)**

(72) Erfinder: **Scholz, Joachim Dipl.-Ing. VDI, An der Ziegelei 14, D-7551 Bischweier (DE)**

(74) Vertreter: **Patentanwälte Dr. Solf & Zapf, Schlossblelche 20 Postfach 13 01 13, D-5600 Wuppertal 1 (DE)**

**Beschreibung**

Die Erfindung betrifft ein kraftgesteuertes Druckregelventil für insbesondere pneumatische Anlagen gemäss dem Oberbegriff des Patentanspruches 1.

Ein derartiges Ventil ist aus der DE-A-30 49 110 bekannt. Es dient beispielsweise in Druckluftanlagen dazu, ein schwaches mechanisches Steuersignal in einen grossvolumigen, proportionalen Arbeitsstrom umzuwandeln. Dieses Steuersignal kann mechanisch, elektromagnetisch oder in sonstiger Weise an das Druckregelventil geführt werden.

Bei vielen Anwendungsbeispielen für solche Druckregelventile wird gefordert, dass die aufgebrachten Betätigungskräfte gering sind und möglichst keine Reibungskräfte überwinden müssen. Weiterhin sollte ein die Betätigungskräfte übertragender Betätigungsstössel bzw. Steuerkolben oder Stellglied einen möglichst kleinen Hub machen, damit bei Betätigung durch einen Elektromagneten die hubabhängigen Kräfte sich möglichst wenig verändern. Desweiteren sollten alle im Ventil beweglichen und dichtenden Teile reibungsfrei sein, da Reibungskräfte das Schaltverhalten des Ventils negativ beeinflussen, da sie eine unerwünschte Hysterese erzeugen. Hier ist bei dem bekannten Ventil allerdings von Nachteil, dass das Ventilglied innerhalb einer Gehäuse-Innenbohrung über einen Dichtring abgedichtet ist, was eine nachteilig hohe Reibung zwischen Dichtring und Innenbohrung verursacht.

Für ein sicheres Arbeiten des Druckregelventils ist es ferner erforderlich, dass sein als Einlassventil arbeitender Teil eine definierte Ruhestellung einnimmt, wenn keine Druckluft zuströmt. Hierzu ist bei dem bekannten Ventil nachteiligerweise eine zusätzliche Schliessfeder erforderlich.

Für einen schnellen Aufbau des Arbeitsdruckes in einem Verbraucher, z.B. Druckluftzylinder, sind möglichst grosse Durchströmquerschnitte im Ventilgehäuse erforderlich. Das gleiche kann für den Entlüftungsvorgang gelten, für den dann noch grössere Durchströmquerschnitte erforderlich sind, da insbesondere im unteren Druckbereich das Entlüften langsamer erfolgt als das Belüften.

Das aus dem Stand der Technik bekannte Ventil besitzt als Stellglied einen Stössel bzw. Steuerkolben, der mechanisch betätigt sowie im Ventilgehäuse geführt und mit Reibungsdichtungen gegen eine darunterliegende Arbeitskammer abgedichtet wird. Beim Aufbringen einer Steuerkraft wird durch den Stössel ein Doppelsitzventil geöffnet, das die Vorratskammer mit der Arbeitskammer verbindet. Dieser Arbeitsdruck wirkt auf den Stössel gegen die Betätigungskraft und stellt ein Gleichgewicht her. In diesem Fall schliesst das Doppelsitzventil wieder, sperrt die Vorratskammer ab und verhindert das weitere Nachströmen der Vorratsluft in die Arbeitskammer. Nachteilig ist hier vor allem die hohe Reibung, die die Regelqualität nachteilig beeinflusst sowie die zusätzliche Rückstellfeder erfordert.

Ein weiterer Nachteil ist ferner darin zu sehen, dass die Regelqualität von der Grösse des Stössels bzw. Steuerkolbens abhängt. Je grösser der Stössel ist, desto weniger fällt die Reibung ins Gewicht. Das bedeutet aber, dass sich die Steuerkräfte quadratisch zur Durchmessergrösse verändern. Dadurch können die Steuerkräfte ab einer gewissen Stössel- bzw. Steuerkolbengrösse nicht mehr durch wirtschaftlich vertretbare Elektromagnete aufgebracht werden, wodurch die Einsetzbarkeit dieser Ventilart stark eingeengt wird.

Eine weitere Ventilbauart unter den bekannten Druckregelventilen ist das als Feinregelventil bekannte, bei dem eine Druckfeder über dem Steuerkolben durch ein Handrad so vorgespannt werden kann, dass der Ausgangsdruck gegenüber dem konstanten Vorratsdruck genau einstellbar verändert werden kann.

Eine weitere Ventilart sind hebelbetätigte Handregelventile, wie sie aus der DE-A-2 251 663 oder der GB-A-1 256 496 bekannt sind und z.B. bei Handbremsen in Kraftfahrzeugen Verwendung finden. Hier wird eine Dreh- oder Schwenkbewegung von Hand über eine mit oben vergleichbare Regeleinrichtung in einen dem Drehwinkel proportionalen Ausgangsdruck umgesetzt.

Eine weitere Ventilart sind elektromagnetisch gesteuerte Druckregelventile, bei denen ein federbelasteter Steuerkolben durch die Kraft des Elektromagneten bewegt wird. Sie erfordern einen Elektromagneten, der über den Steuerweg eine möglichst gleiche Kraftabgabe erbringt. Die bekannten Ventile dieser Bauart sind kompliziert im Aufbau und daher fertigungs- und kostenintensiv. Ausserdem sind sie in der Praxis nur bis zu einem Nenndurchmesser von 4 mm, das ist der maximale Durchströmdurchmesser, auf dem Markt. Für grössere Nenndurchmesser werden sog. Vorsteuerventile eingesetzt.

Elektromagnetisch gesteuerte Wegeventile haben keine Druckregelfunktion und sind in ihrem Aufbau völlig verschieden von kraftgesteuerten Druckregelventilen.

Der Erfindung liegt die Aufgabe zugrunde, ein kraftgesteuertes Druckregelventil der gattungsgemässen Art zu schaffen, bei dem auf einfache Weise mit kleinen Betätigungskräften und kurzen Betätigungswegen grosse Arbeitsquerschnitte geöffnet werden. Dabei soll das erfindungsgemässe Druckregelventil weitgehend reibungsfrei arbeiten, aus wenigen Teilen aufgebaut sein und in weiterer Ausgestaltung mit einfachen Mitteln eine sehr schnelle Be- und Entlüftung der Arbeitskammer ermöglichen. Es soll weiterhin so einfach im Aufbau sein, dass insbesondere das Ventilgehäuse auch aus Kunststoff gespritzt sein kann und eine mechanische Nachbearbeitung nicht notwendig ist.

Diese Aufgabe wird im wesentlichen durch die im Patentanspruch 1 gekennzeichnete Erfindung gelöst. Weiterbildungen und vorteilhafte Ausführungsbeispiele sind in den Unteransprüchen angegeben.

Die Erfindung ermöglicht es in vorteilhafter Weise, dass mit einfachen Mitteln und mit einem minimalen Aufwand an Mitteln, unter Verwendung einfacher und handelsüblicher Elastomerteile, ein nahezu reibungsfrei arbeitendes Druckregelventil geschaffen wird, das mit geringen Betätigungskräften grosse Arbeitsquerschnitte öffnet und zwar insbesondere ohne Zuhilfenahme zusätzlicher Mittel, wie Rückstellfedern und Vorsteuerventileinheiten. Durch einfachen Aufbau des Ventilgehäuses ist es ausserdem möglich, dass dieses im Spritzverfahren auch aus Kunststoff hergestellt werden kann. Weiter wird durch eine Elastomerscheibe ein sehr schnelles Entlüften des Arbeitsraumes bewirkt. Dabei ist von besonderem Vorteil, dass den verwendeten Elastomeren jeweils mehrere Funktionen zugeordnet werden.

So hat eine erfindungsgemäss unter dem Stellglied angeordnete Steuermembran die Funktionen:
– Abdichten des Gehäusedeckels gegen das Ventilgehäuse,
– Dichtsitz für den als Einlassventil wirkenden Teil des Ventils und das Stellglied,
– Bilden der Wirkfläche für das Stellglied.

Ein erfindungsgemäss zwischen dem als Einlassventil wirkenden Ventilglied und dem Ventilgehäuse angeordneter Dichtring hat die Funktionen:
– Abdichten des Vorratsraumes,
– Führen des Ventilgliedes und
– Erzeugen einer Schliesskraft.

Die Erfindung wird anhand von Ausführungsbeispielen, die in den Zeichnungen dargestellt sind, näher erläutert. In der Zeichnung zeigen:
Fig. 1 ein erstes Ausführungsbeispiel der Erfindung im Entlüftungszustand als Mittellängsschnitt,
Fig. 2 das Druckregelventil nach Fig. 1, jedoch im Belüftungszustand,
Fig. 3 den etwa durch den Linienzug A in Fig. 1 umgrenzten Teil des dort dargestellten Druckregelventils in grösserer Darstellung,
Fig. 4 eine Draufsicht auf das Ventilglied der Anordnung der Fig. 3,
Fig. 5 ein weiteres Ausführungsbeispiel der Erfindung zum Erreichen kurzer Entlüftungszeiten im Entlüftungszustand in einer Fig. 1 entsprechenden Darstellung und
Fig. 6 das Druckregelventil nach Fig. 5, jedoch im Belüftungszustand.

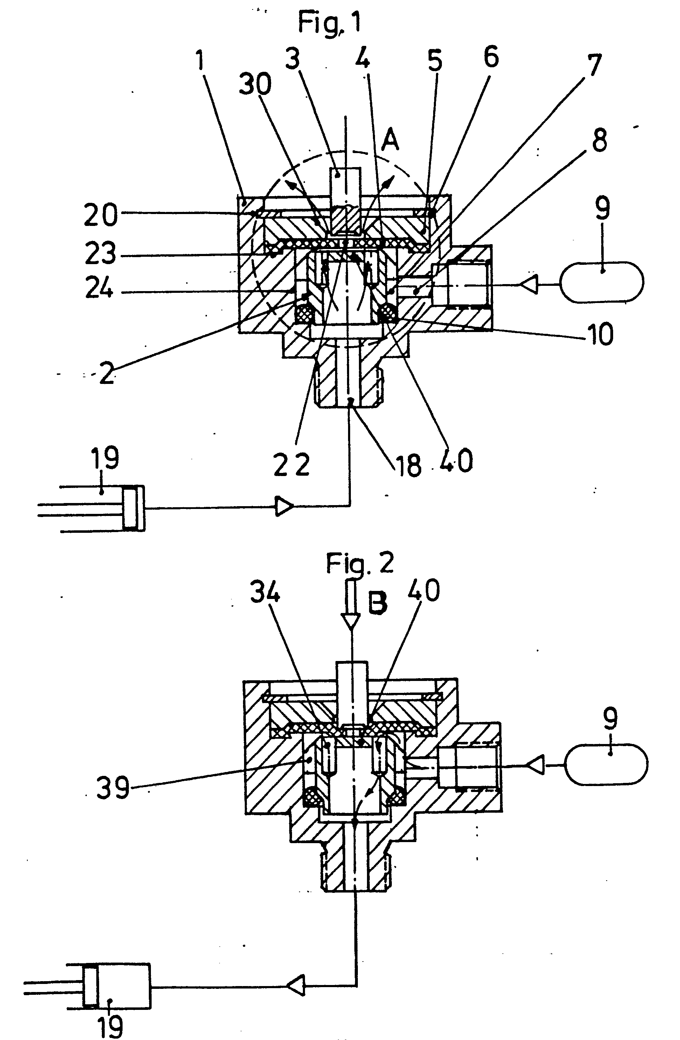

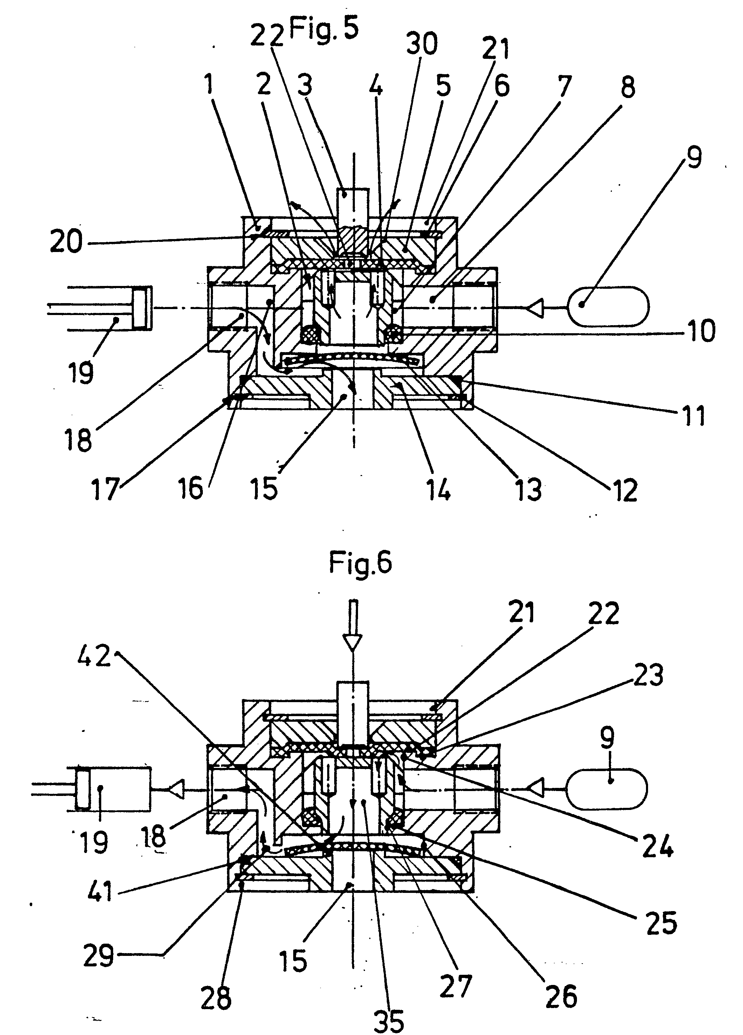

Das erfindungsgemässe, kraftgesteuerte Druckregelventil ist zwischen einer Druckmittelquelle 9 für ein beliebiges, insbesondere jedoch pneumatisches Fluid, beispielsweise einem Drucklufttank, und einem Verbraucher 19, beispielsweise dem Stellzylinder der Druckluftbremse eines Fahrzeuges angeordnet (Fig. 1, 2, 5, 6). Das Ventilgehäuse 1 des Druckregelventils weist einen Druckmitteleingang 8, einen ersten Druckmittelausgang 18 zum Verbraucher 19 und einen zweiten Druckmittelausgang, d. h. eine Entlastungsöffnung zum Umgebungsmedium, beispielsweise zur Umgebungsluft, auf. Der zweite Druckmittelausgang wird noch im einzelnen beschrieben, vorerst soll nur darauf hingewiesen sein, dass er aus einem radialen Spiel zwischen einer angesenkten Bohrung 30 und einem Stellglied 3 als erster Entlastungsöffnung besteht und in einer Weiterbildung der Erfindung zusätzlich aus einer zweiten Druckmittelabströmöffnung 15 des Gehäuses 1 bestehen kann (Fig. 5).

In einer als Belüftungsstellung bezeichneten Betriebsstellung des Ventils ist die Druckmittelquelle 9 durch das Ventil mit dem Verbraucher 19 verbunden, um diesen mit Druckfluid, also beispielsweise Druckluft, aus der Druckmittelquelle 9 zu füllen. In einer anderen, als Entlüftungsstellung bezeichneten Betriebsstellung des Ventils ist der Verbraucher 19 an das Umgebungsmedium angeschlossen, um entlüftet zu werden. Dabei sperrt das Ventil die Druckmittelquelle 9, um deren Entleeren zu verhindern.

Der Druck, der im Verbraucher 19 durch Zuführung von Druckmittel aus der Druckmittelquelle 9 maximal erzeugt werden kann, ist der in der Druckmittelquelle 9 tatsächlich herrschende Druck. Welcher Druck sich im Verbraucher 19 als Teildruck des in der Druckmittelquelle 9 herrschenden Druckes tatsächlich einstellt, ist abhängig von einer Kraft, die als Steuersignal zwangsweise auf das Stellglied 3 in Richtung der Längsachse desselben zur Wirkung gebracht wird, beispielsweise mittels eines Elektromagneten.

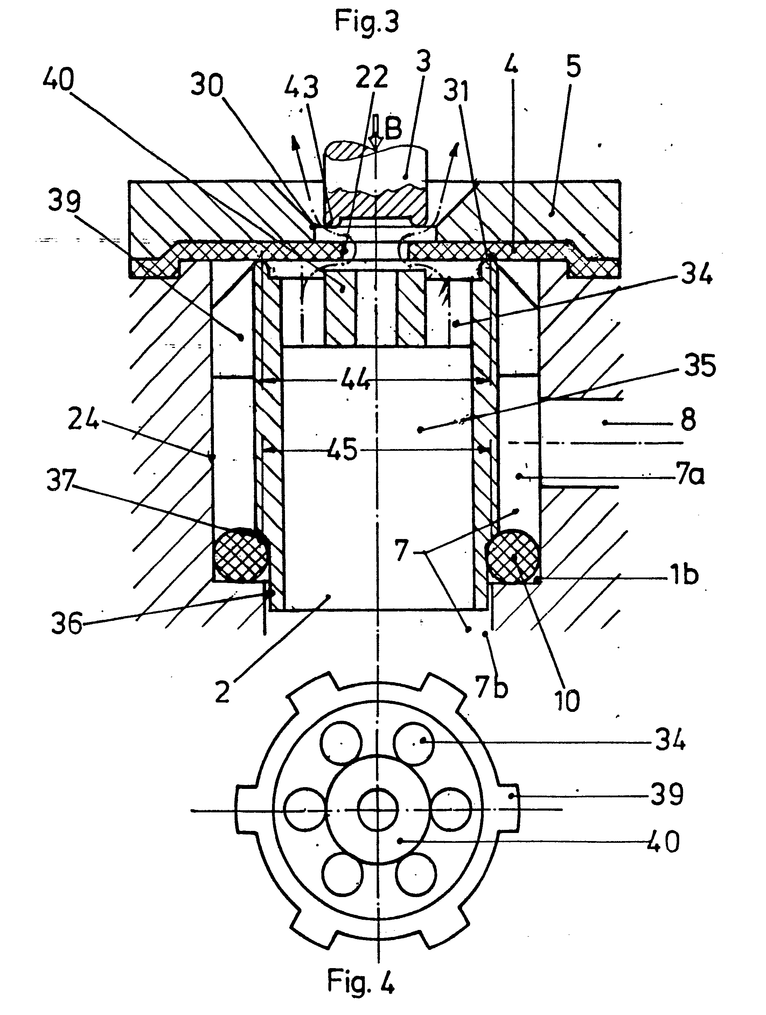

Eine einfachere Ausführungsform des erfindungsgemässen Druckregelventils ist in Fig. 1 und 2 in zwei verschiedenen Betriebsstellungen dargestellt. Das Ventil weist dabei das Ventilgehäuse 1 mit dem Druckmitteleingang 8 und dem Druckmittelausgang 18 auf. Wie bereits erwähnt, ist der Druckmitteleingang 8 mit der Druckmittelquelle 9 verbunden und der Druckmittelausgang 18 ist mit dem Verbraucher 19 verbunden. Die Längsachsen von Druckmitteleingang 8 und Druckmittelausgang 18 schneiden einander unter einem Winkel von 90°. Druckmitteleingang 8 und Druckmittelausgang 18 münden in eine Vorratskammer 7, die achsgleich zum Druckmittelausgang 18 im Gehäuse 1 angeordnet, von einer Wand 24 umschlossen und Teil einer Bohrung ist, die das Gehäuse von einem zum anderen Ende, von beiden Seiten her nach einwärts gestuft, durchdringt. Die Vorratskammer 7 ist an dem dem Druckmittelausgang 18 gegenüberliegenden Ende durch eine Steuermembrane 4 aus einem Elastomer verschlossen, die mit ihrer Aussenseite an einem Deckel 5 anliegt, der die Steuermembrane 4 mit ihrem äusseren Rand spiellos in eine Ringnut 23 des Ventilgehäuses 1 eindrückt. Der Deckel 5 ist mittels eines in einer Ringnut 20 des Gehäusebohrungsabschnittes 21 eingesetzten Sicherungsringes 6 in einer solchen Stellung im Gehäuse 1 festgelegt, dass die Steuermembrane 4 spiellos in der Nut 23 gehalten ist. In dem Deckel 5 ist achsgleich zur Vorratskammer 7 die angesenkte Bohrung 30 angeordnet, in der Steuermembrane 4 ist ebenfalls achsgleich zu der Vorratskammer 7 eine Bohrung 22 angeordnet. Der von dem Sicherungsring 6 umschlossene Raum ist deutlich grösser als der Querschnitt der zylindrischen Vorratskammer 7, der Querschnitt der Bohrung 22 der Steuermembrane 4 ist deutlich kleiner als der Querschnitt der Vorratskammer 7, der kleinere Querschnitt der Bohrung 30 ist der Bohrung 22 zugekehrt und grösser als der Querschnitt der Bohrung 22, der grössere Querschnitt der Bohrung 30 ist dem Sicherungsring 6 zugekehrt und kleiner als der von diesem umgebene Freiraum. Die das Gehäuse 1 durchdringenden Bohrungen sind von beiden Enden her derart gestuft, dass die Durchmesser der einzelnen Bohrungsabschnitte abnehmen, was die Fertigung des Gehäuses erleichtert.

In der Vorratskammer 7 ist das Ventilglied 2 angeordnet, das im wesentlichen eine zylindrische Hülse ist, die am oberen Ende mit einem Deckel 40 verschlossen ist und am Aussenumfang mit gleichmässig auf diesem verteilten Nasen 39 versehen ist, mit denen das Ventilglied 2 radial spiellos aber axial verstellbar in der zylindrischen Vorratskammer 7 geführt ist. Der Deckel 40 weist nahe seinem Aussenrand, gleichmässig auf dem Umfang verteilt, eine Anzahl Axialbohrungen 34 sowie zentral eine weitere Axialbohrung auf. An seinem unteren Ende ist das Ventilglied 2 eingeschnürt, und im Bereich dieser Einschnürung 36 stützt sich das Ventilglied 2 über einen in sich elastisch nachgiebigen Ring 10 auf einem die Vorratskammer 7 umgebenden Bund 1b ab. Der Übergang 37 zum eingeschnürten Abschnitt 36 der Zylinderwand des Ventilgliedes ist konisch, wobei der Winkel dieses Konus grösser als der Reibungswinkel zwischen dem Material des Ringes 10 und dem Material des Gehäuses 1 sein muss, um ein Klemmen des Ventilgliedes zu vermeiden.

Der Deckel 40 des Ventilgliedes und der obere Rand des zylindrischen Hülsenrandes sind so konturiert, wie es sich insbesondere aus Fig. 3 ergibt. In der in Fig. 1 und 3 dargestellten Betriebsstellung des erfindungsgemässen Ventils liegt das Ventilglied mit seinem oberen abgerundeten Rand 31 als Dichtfläche an der Unterseite der Steuermembrane 4 an. Der Druckmitteleingang 8 steht mit dem über den Ring 10 liegenden Teil 7a der Vorratskammer 7 in Verbindung, dieser Teil 7a ist jedoch durch den Ring 10 und das Anliegen des Ventilgliedes 2 mit seinem Rand 31 an der Unterseite der Steuermembrane 4 vom Druckmittelausgang 18 abgesperrt. Andererseits steht der Druckmittelausgang 18 über den unter dem Ring 1 liegenden Teil 7b der Vorratskammer 7 mit dem Innenraum 35 des Ventilgliedes 2 in Verbindung, der über die Axialbohrungen 34, die zentrische Bohrung, die Bohrung 22 der Steuermembrane 4 und den Ringspalt zwischen dem Steuerkolben 3 und der Bohrung 30 mit der Umgebung des Ventils in Verbindung steht.

Dabei ist die in Fig. 1 und 3 dargestellte Betriebsstellung des Ventils als die Betriebsstellung ausgewiesen, in der der Verbraucher 19 entlüftet ist. Im Verbraucher 19 eingeschlossenes Fluid kann gemäss den Pfeilen in Fig. 1 und 3 über das Ventil aus dem Verbraucher 19 entweichen. Die Druckmittelquelle 9 ist vom Verbraucher 19 getrennt.

Soll der Verbraucher 19 belüftet werden, so ist er stattdessen mit der Druckmittelquelle 9 zu verbinden. Um das Ventil in die entsprechende Betriebsstellung zu bringen, wird auf das Stellglied 3 eine gegen das Ventil gerichtete Steuerkraft (Pfeil B, Fig. 3) aufgebracht, deren Grösse entsprechend dem im Verbraucher 19 gewünschten Druck gewählt wird. Diese Steuerkraft bewegt das Stellglied 3 in das Ventil hinein, bis es mit seiner inneren abgerundeten Kante 43 als Dichtkante auf dem inneren, freien Randbereich der Steuermembrane 4 zunächst zur Anlage kommt und diesen beim weiteren Verstellen nach innen verformt. Bei der weiteren Verstellbewegung des Stellgliedes wird das zunächst vorliegende Axialspiel zwischen Steuermembrane und innerem Bund des Deckels 40 überwunden und bei der noch weiteren Verstellbewegung des Stellgliedes 3 wird das Ventilglied 2 nach innen verstellt, so dass es sich mit seinem Rand 31 von der Steuermembrane 4 löst. Das Auftreffen des Stellgliedes 3 auf der Steuermembrane 4 beendet den Entlüftungszustand, indem der Ringspalt zwischen Stellglied 3 und Rand der Bohrung 30 gesperrt wird. Beim Abheben des Ventilgliedes 2 von der Steuermembrane 4 wird ein Ringspalt freigegeben, der den Teil 7a der Vorratskammer 7 über dem Ring 10 und damit den Fluideinlass 8 durch die Bohrung 34 mit dem Innenraum 35 des Ventilgliedes 2 und damit mit dem Druckmittelausgang 18 verbindet. Die so gegebene Fluidströmung ist durch die Pfeile in Fig. 2 dargestellt, sie weist diese Betriebsstellung des erfindungsgemässen Ventils als die Belüftungsstellung für den Verbraucher 19 aus.

Ist im Innenraum 35 des Ventilgliedes 2 ein Druck erreicht, der der auf das Stellglied 3 aufgebrachten Steuerkraft entspricht, und wird noch weiter Druckfluid zugeführt, so stellt sich unmittelbar der Zustand ein, in dem der Ventilgliedraum 35 von der Vorratskammer 7 bzw. deren Teil 7a getrennt wird, es herrscht ein Gleichgewichtszustand, der Verbraucher ist sowohl vom Auslass zwischen Stellglied 3 und Bohrungswand 30 als auch von dem Druckmitteleingang 8 abgesperrt. Übersteigt dagegen der in dem Innenraum 35 des Ventilgliedes 2 durch Druckfluid aus der Druckmittelquelle 9 aufgebaute Druck die von aussen auf das Stellglied 3 aufgebrachte Steuerkraft, so wird das Stellglied 3 entgegen der Steuerkraft angehoben und der Druck im Verbraucher 19 kann nicht den Wert der zwangsweise auf das Stellglied 3 aufgebrachten, frei wählbaren Steuerkraft übersteigen. Der eingestellte Wert der Steuerkraft bestimmt also in der Tat den Druck im Verbraucher 19. Die Steuerkraft wirkt auf einem kleinen Umfang und das Druckfluid strömt auf einen grossen Umfang in den Innenraum 35 des Ventilgliedes ein. Das Begrenzen des Druckes im Innenraum 35 und im Verbraucher 19 ist darauf zurückzuführen, dass beim Einströmen von Fluid aus der Druckmittelquelle in den Innenraum 35 dieses nicht nur in den Verbraucher 19 wirkt, sondern durch die zentrale Öffnung des Deckels 40 und die achsgleiche Öffnung 22 der Steuermembrane 4 auf die Unterseite des Stellgliedes 3 und somit der Steuerkraft B direkt entgegenwirkt.

Zum Entlüften des Verbrauchers 19 wird die Steuerkraft auf das Stellglied 3 verringert, dieses bewegt sich unter dem Druck im Ventilgliedinnenraum 35 nach aussen, der Innenwand der Steuermembrane folgt und kehrt in die in Fig. 1 und 3 dargestellte Kontur zurück und, wenn sich das Stellglied weiter nach aussen bewegt, hebt dieses von der Steuermembrane ab und es entweicht Druckfluid, bis der Gleichgewichtszustand erneut erreicht ist.

Erfindungsgemäss soll der Durchmesser 44 des als Ventilsitz wirkenden Randes 31 des Ventilgliedes 2 gleich dem Durchmesser 45 der Linie des Zusammenwirkens zwischen Ring 10 und Übergangskonus 37 des Ventilgliedes 2 sein. Sind die Durchmesser 44 und 45 erfindungsgemäss gleich gross, so wird das Ventilglied 2 bei Gleichgewichtszustand zwischen dem Druck innerhalb und ausserhalb des Ventilgliedes von der Vorspannung des Ringes 10 mit seinem Rand 31 an der Steuermembrane 4 in Anlage gehalten.

Das erfindungsgemässe Ventil ist in seiner Bau-und Arbeitsweise sehr einfach und betriebssicher. Es verwendet nur einfache, verschleissarme Bauteile, es ist zuverlässig und mit geringem Materi-al- und Arbeitsstundeneinsatz herzustellen. Des-gleichen wird ein vertretbarer Maschineneinsatz notwendig sein. Zum Verstellen des Ventils ist eine geringe Steuerkraft erforderlich, die auf kurzen Steuerwegen zum Einsatz kommt. Die Steuerkraft wird über das Stellglied 3 zum Einsatz gebracht, der Durchströmquerschnitt im Bereich der Linie 31 wird auf einem angesichts der Grösse des Ventils grossen Umfang freigegeben, so dass nach dem Erreichen der Belüftungsstellung deswegen sowie wegen der kurzen Strömungswege im Ventil der Verbraucher 19 in extrem kurzer Zeit belüftet, d.h. mit Druckfluid gefüllt wird. Das Ventil arbeitet weitestgehend frei von Reibungskräften, so dass es nicht nur verschleissarm, sondern auch genau und verzögerungsarm arbeitet.

Wird auf ein entsprechend rasches Entlüften kein besonderer Wert gelegt, so wird das Ventil gemäss Fig. 1 bis 4 den gestellten Anforderungen in optimaler Weise genügen, wie sich insbeson-re aus den obigen Ausführungen ergibt.

Durch die relativ einfache weitere Ausgestaltung gemäss Fig. 5 und 6 kann jedoch darüberhinaus auch ein dem raschen Belüften entsprechendes raschen Entlüften erreicht werden.

Bei dieser Lösung liegen Druckmitteleingang 8 und Druckmittelausgang 18 gleichachsig so, dass ihre Längsachsen die Längsachse der Vorratskammer 7 schneiden. Gleichachsig zur oberen Entlastungsöffnung zwischen Stellglied 3 und Bohrungswand 30 ist am anderen Ende des Gehäuses 1 eine weitere Druckmittelabströmöffnung 15 vorgesehen, deren Querschnitt dem Querschnitt von Druckmitteleingang 8 und Druckmittelausgang 18 zumindest etwa entspricht. Am inneren Ende ist die zweite Druckmittelabströmöffnung von einem Bund 42 umgeben, der eine relativ grosse Oberfläche senkrecht zur Längsachse der Vorratskammer 7 hat. Oberhalb dieses Bundes 43 ist eine Entlüftungsscheibe 13 wiederum aus einem Elastomer angeordnet. Die Entlüftungsscheibe ist von Natur aus eben, sie verformt sich jedoch unter dem Strömungsdruck des Fluids.

Diese Scheibe 13 ist zwischen dem Bund 42 und dem diesem Bund 42 gegenüberliegenden Rand 27 am inneren Ende der Vorratskammer 7 in Längsrichtung der Kammer 7 verstellbar. Soll der Verbraucher 19 in der vorbeschriebenen Weise belüftet werden, so legt der Druck im Ventilgliedinnenraum 35 die Scheibe 13 an dem Bund 42 an und Druckfluid gelangt durch eine Arbeitskammer 16 in den Druckmittelausgang 18 (Fig. 6). Wird zum Entlüften des Verbrauchers 19 in der vorbeschriebenen Weise die Steuerkraft auf das Stellglied 3 verringert und fällt danach durch Druckfluid, das durch den Ringspalt zwischen Stellglied 3 und Bohrungswand 30 aus dem Ventilgliedinnenraum entweicht, der Druck im Ventilgliedinnenraum 35 unter den Druck im Druckmittelausgang 18, so wird das aus dem Verbraucher 19 abströmende Fluid die Scheibe 13 von dem Bund 42 abheben, und es erfolgt ein praktisch schlagartiger Druckabfall im Verbraucher, was bei bestimmten Verbrauchern ebenso erwünscht ist, wie ein rasches Belüften. Bei der erfindungsgemässen Ausgestaltung wird dieser Vorteil in einfacher Weise zusätzlich erreicht.

Aus Gründen der einfachen Montage und Demontage des Ventils ist der Bund 42 Teil eines Bodens 14, der das Ventilgehäuse 1 am einen Ende verschliesst, die Druckmittelabströmöffnung 15 umschliesst und der zwischen einem Sicherungsring 12 und einem Bund des Gehäuses unter Einlage einer Dichtschnur 11 gehalten wird.

Ersichtlich ist die Vorratskammer 7 mit den Abschnitten 7a, 7b Teil einer Bohrung, die das Gehäuse 1 in der in der Zeichnung vertikalen Richtung durchdringt und von beiden äusseren Enden her im Querschnitt stufenförmig kleiner wird, was den Vorteil hat, dass die Herstellung einfach und kostengünstig möglich ist und gegebenenfalls eine einfache Herstellungsform Anwendung finden kann.

**Patentansprüche**

1. Kraftgesteuertes Druckregelventil, dessen Gehäuse (1) einen mit einer Druckmittelquelle (9) verbundenen Druckmitteleingang (8), einen mit einem Verbraucher (19) verbundenen Druckmittelausgang (18) und eine Entlastungsöffnung (30) aufweist, die zu einer Druckmittelaufnahme niedrigen Druckes führt, wobei ein hohlzylindrisches Ventilglied (2) zwangsweise zwischen zwei Endstellungen über ein Stellglied (3) verstellbar ist, um den Druckmittelausgang (18) entweder bei gesperrter Entlastungsöffnung (30) mit dem Druckmitteleingang (8) oder bei gesperrtem Druckmitteleingang (8) mit der Entlastungsöffnung (30) zu verbinden, dadurch gekennzeichnet, dass das Ventilglied (2) in einer ständig mit dem Druckmitteleingang (8) verbundenen, gegen den Druckmittelausgang (18) abgesperrten Gehäusekammer (7a) axial verstellbar, radial spielarm geführt angeordnet ist und mit seinem ersten Rand eine mit dem Druckmittelausgang (18) verbundene Öffnung umgibt, mit seinem zweiten Rand (31) mit einem achsgleich zur Entlastungsöffnung (30) angeordneten Ventilsitz zusammenwirkt sowie einen zweiten Ventilsitz in einem Deckel (40) des Ventilgliedes (2) umgibt, mit dem das die Verstellkraft auf das Ventilglied (2) aufbringende, innerhalb der Entlastungsöffnung (30) angeordnete Stellglied (3) mit seiner ringförmigen Kante (43) zusammenwirkt und dieser Stellkraft eine Rückstellkraft entgegenwirkt, die während der Verstellung des Ventilgliedes (2) unter dem Einfluss der Verstellkraft zum Verbinden des Innenraumes (35) des Ventilgliedes (2) mit dem Druckmitteleingang (8) bei verschlossener Entlastungsöffnung (30) erzeugt wird, um im Zeitpunkt des Überschreitens der Verstellkraft den zweiten Rand (31) des Ventilgliedes (2) wieder an seinen Ventilsitz anzulegen.

2. Druckregelventil nach Anspruch 1, dadurch gekennzeichnet, dass die Rückstellkraft auf einem Durchmesser (45) auf das Ventilglied (2) einwirkt, der dem Durchmesser (44) des mit dem ersten Ventilsitz zusammenwirkenden, zweiten Randes (31) des Ventilgliedes gleich ist.

3. Druckregelventil nach Anspruch 1 oder 2, dadurch gekennzeichnet, dass die Rückstellkraft mit einem elastischen Dichtring (10) erzeugt wird, der die Gehäusekammer (7a) gegen den Druckmittelausgang (18) des Ventilgehäuses (1) absperrt.

4. Druckregelventil nach Anspruch 3, dadurch gekennzeichnet, dass der Dichtring (10) zur radialen Führung des Ventilgliedes (2) im Bereich des ersten Randes liegt, der die ständig mit dem Druckmittelausgang (18) verbundene Öffnung des Ventilgliedes (2) umgibt.

5. Druckregelventil nach einem der Ansprüche 1 bis 4, dadurch gekennzeichnet, dass der zweite Ventilsitz im Deckel (40) des Ventilgliedes (2) innerhalb eines Lochkranzes (34) angeordnet ist, der den Innenraum (35) des Ventilgliedes (2) ständig mit einer Kammer innerhalb des zweiten Randes (31) des Ventilgliedes verbindet, der mit dem ersten Ventilsitz zusammenwirkt.

6. Druckregelventil nach einem der Ansprüche 1 bis 5, dadurch gekennzeichnet, dass der erste Ventilsitz auf einer im Ventilgehäuse (1) gehaltenen Lochscheibe (4) gebildet ist, deren zentrisch angeordnetes Loch (22) achsgleich zum zweiten Ventilsitz sowie zu der mit dem zweiten Ventilsitz zusammenwirkenden Kante (43) des Stellgliedes (3) angeordnet ist.

7. Druckregelventil nach Anspruch 6, dadurch gekennzeichnet, dass der zweite Ventilsitz innerhalb der zur Längsachse des Ventilgliedes (2) senkrechten Ebene liegt, in der der mit dem ersten Ventilsitz zusammenwirkende, zweite Rand (31) des Ventilgliedes (2) liegt, und dass der das Loch (22) der Lochscheibe (4) umgebende Scheibenbereich elastisch verformbar ist, um bei einer Annäherung des Stellgliedes (3) an den zweiten Ventilsitz an diesen, die Entlastungsöffnung (30) sperrend, angelegt zu werden und bei der Rückstellbewegung des Stellgliedes (3), die Entlastungsöffnung (30) freigebend, diesem folgen zu können.

8. Druckregelventil nach einem der Ansprüche 2 bis 7, dadurch gekennzeichnet, dass die Rückstellkraft in einem konischen Übergangsbereich (37) zwischen zwei zylindrischen Abschnitten des Ventilgliedes (2) wirkt.

9. Druckregelventil nach Anspruch 4, dadurch gekennzeichnet, dass zur radialen Führung des Ventilgliedes (2) in der Gehäusekammer (7a) im Bereich des Deckels (40) starre Führungsnasen (39) des Ventilgliedes dienen, die mit der Wand der Gehäusekammer zusammenwirken.

10. Druckregelventil nach einem der Ansprüche 1 bis 9, dadurch gekennzeichnet, dass die Gehäusekammer (7a) Teil einer gestuften Bohrung (18, 7b, 7a, 20) des Gehäuses ist, deren Abschnitte den Druckmittelausgang (18), die in zwei Abschnitte (7a, 7b) unterteilte Gehäusekammer (7) und einen, einen die Entlastungsöffnung (30) aufweisenden Gehäusedeckel (5) aufnehmenden Abschnitt bilden, wobei die Abschnittsdurchmesser von beiden Enden der Bohrung her abnehmen.

11. Druckregelventil nach einem der Ansprüche 1 bis 10, dadurch gekennzeichnet, dass die Entlastungsöffnung (30) allein dem Entweichen des Druckmittels aus dem Innenraum (35) des Ventilgliedes (2) dient, während das Druckmittel beim Abströmen aus dem Verbraucher (19) über eine im Querschnitt deutlich grösser bemessene, zweite Druckmittelabströmöffnung (15) des Ventilgehäuses abströmt.

12. Druckregelventil nach Anspruch 11, dadurch gekennzeichnet, dass die Druckmittelabströmöffnung (15) mittels einer verstellbaren Membranscheibe (13) verschlossen bzw. freigegeben wird.

13. Druckregelventil nach Anspruch 12, dadurch gekennzeichnet, dass die Verstellbewegungen der Membranscheibe (13) von dem aus dem Innenraum (35) des Ventilgliedes (2) zum Verbraucher (19) und von dem aus dem Verbraucher (19) abströmenden Druckmittel bewirkt werden.

14. Druckregelventil nach Anspruch 12 oder 13, dadurch gekennzeichnet, dass die Membranscheibe (13) mit einem die Druckmittelabströmöffnung (15) umgebenden Bund (42) zusammenwirkt.

15. Druckregelventil nach einem der Ansprüche 1 bis 10, dadurch gekennzeichnet, dass der Durchmesser des mit dem ersten Ventilsitz zusammenwirkenden, zweiten Randes (31) des Ventilgliedes (2) erheblich grösser ist, als der Durchmesser der mit dem zweiten Ventilsitz zusammenwirkenden Kante (43) des Stellgliedes (3).

16. Druckregelventil nach einem der Ansprüche 1 bis 15, gekennzeichnet durch Luft als Druckmittel, wobei der Bereich geringen Druckes die Atmosphäre ist.

17. Anwendung eines kraftgesteuerten Druckregelventiles gemäss Anspruch 16 für die Druckluftbremse von Kraftfahrzeugen.

**Claims**

1. Power-controlled pressure-regulating valve, whereof the housing (1) comprises a pressure medium inlet (8) connected to a pressure medium source (9), a pressure medium outlet (18) connected to a consuming device (19) and a relief opening (30), which leads to a pressure medium receptacle of low pressure, whereby a hollow, cylindrical valve member (2) can be adjusted forcibly between two end positions by way of a control member (3), in order to connect the pressure medium outlet (18) either to the pressure medium inlet (8) when the relief opening (30) is closed, or to the relief opening (30) when the pressure medium inlet (8) is closed, characterised in that the valve member (2) is arranged so that it is guided in an axially adjustable manner, but radially with little clearance in a housing chamber (7a) constantly connected to the pressure medium inlet (8) and closed with respect to the pressure medium outlet (18), and with its first edge surrounds an opening connected to the pressure medium outlet (18), with its second edge (31) co-operates with a valve seat arranged coaxially with respect to the relief opening (30) and surrounds a second valve seat in a cover (40) of the valve member (2), with which the control member (3) applying the adjusting force to the valve member (2), located within the relief opening (30) co-operates with its annular edge (43) and acting against this adjusting force is a restoring force, which is produced during the adjustment of the valve member (2) under the influence of the adjusting force for connecting the interior (35) of the valve member (2) to the pressure medium inlet (8) when the relief opening (30) is closed, in order to apply the second edge (31) of the valve member (2) once more against its valve seat at the time when the adjusting force is exceeded.

2. Pressure-regulating valve according to Claim 1, characterised in that the restoring force acts on the valve member (2) on a diameter (45) which is equal to the diameter (44) of the second edge (31) of the valve member, which edge co-operates with the first valve seat.

3. Pressure-regulating valve according to Claim 1 or 2, characterised in that the restoring force is produced with a resilient sealing ring (10), which closes off the housing chamber (7a) with respect to the pressure medium outlet (18) of the valve housing (1).

4. Pressure-regulating valve according to Claim 3, characterised in that for the radial guidance of the valve member (2), the sealing ring (10) lies in the region of the first edge which surrounds the opening of the valve member (2) constantly connected to the pressure medium outlet (18).

5. Pressure-regulating valve according to one of Claims 1 to 4, characterised in that the second valve seat in the cover (40) of the valve member (2) is located within a perforated rim (34), which constantly connects the interior (35) of the valve member (2) to a chamber within the second edge (31) of the valve member, which edge co-operates with the first valve seat.

6. Pressure-regulating valve according to one of Claims 1 to 5, characterised in that the first valve seat is formed on a perforated disc (4) held in the valve housing (1), whereof the centrally located hole (22) is arranged coaxially with respect to the second valve seat and to the edge (43) of the control member (3) which edge co-operates with the second valve seat.

7. Pressure-regulating valve according to Claim 6, characterised in that the second valve seat lies within the plane perpendicular to the longitudinal axis of the valve member (2), in which lies the second edge (31) of the valve member (2), which edge co-operates with the first valve seat, and that the disc region surrounding the hole (22) of the perforated disc (4) is elastically deformable in order that as the control member (3) approaches the second valve seat, it can be applied against the latter, blocking the relief opening (30) and at the time of the restoring movement of the control member (3), releasing the relief opening (30), it can follow the latter.

8. Pressure-regulating valve according to one of Claims 2 to 7, characterised in that the restoring force acts in a conical transition region (37) between two cylindrical sections of the valve member (2).

9. Pressure-regulating valve according to Claim 4, characterised in that serving for the radial guidance of the valve member (2) in the housing chamber (7a) in the region of the cover (40) are rigid guide lugs (39) of the valve member, which cooperate with the wall of the housing chamber.

10. Pressure-regulating valve according to one of Claims 1 to 9, characterised in that the housing chamber (7a) is part of a stepped bore (18, 7b, 7a, 20) of the housing, whereof the sections form the pressure medium outlet (18), the housing chamber (7) divided into two sections (7a, 7b) and a section receiving a housing cover (5) comprising the relief opening (30), whereby the section diameters decrease from both ends of the bore.

11. Pressure-regulating valve according to one of Claims 1 to 10, characterised in that the relief opening (30) serves solely for the escape of the pressure medium from the interior (35) of the valve member (2), whereas when it flows out of the consuming device (19), the pressure medium flows by way of a second pressure medium outlet opening (15) of the valve housing, which clearly has a larger cross-section.

12. Pressure-regulating valve according to Claim 11, characterised in that the pressure medium outlet opening (15) is closed or opened by means of an adjustable spring disc (13).

13. Pressure-regulating valve according to Claim 12, characterised in that the adjusting movements of the spring disc (13) are brought about by the pressure medium flowing from the interior (35) of the valve member (2) to the consuming device (19) and by the pressure medium flowing out of the consuming device (19).

14. Pressure-regulating valve according to Claim 12 or 13, characterised in that the spring disc (13) co-operates with a flange (42) surrounding the pressure medium outlet opening (15).

15. Pressure-regulating valve according to one of Claims 1 to 10, characterised in that the diameter of the second edge (31) of the valve member (2), co-operating with the first valve seat, is considerably greater than the diameter of the edge (43) of the control member (3) co-operating with the second valve seat.

16. Pressure-regulating valve according to one of Claims 1 to 15, characterised by air as the pressure medium, whereby the area of low pressure is the atmosphere.

17. Use of a power-controlled pressure-regulating valve according to Claim 16 for the compressed-air brake of motor vehicles.

## Revendications

1. Régulateur de pression commandé par une force dont le boîtier (1) présente une entrée (8) de l'agent de pression reliée à la source (9) de l'agent et une sortie (18) reliée à l'utilisateur (19), et une ouverture de décharge (30) grâce à laquelle l'agent entre à faible pression, un élément de soupape (2) ayant la forme d'un cylindre creux étant réglable de force entre deux positions extrêmes au moyen d'un organe de réglage (3) pour connecter la sortie (18) soit à l'entrée (8) l'ouverture de décharge (30) étant fermée, soit à l'ouverture de décharge (30) l'entrée (8) étant fermée, caractérisé en ce que l'élément de soupape (2) est disposé avec un faible jeu radial et axialement réglable dans une chambre (7a) du boîtier connectée en permanence à l'entrée (8) et isolée de la sortie (18), son premier bord entourant une ouverture connectée à la sortie (18), son deuxième bord (31) coopérant avec un siège de soupape disposé dans le même axe que l'ouverture de décharge (30), entourant également un deuxième siège de soupape dans un capot (40) de l'élément de soupape (2) avec lequel coopère, par son arête annulaire (43), l'organe de réglage (3) appliquant la force de réglage sur l'élément (2) et disposé dans l'ouverture de décharge (30), et en ce que cette force de réglage est contrecarrée par une force de rappel qui est engendrée au cours du réglage de l'élément (2) sous l'influence de la force de réglage pour connecter l'espace intérieur (35) de l'élément (2) à l'entrée (8), l'ouverture de décharge (30) étant fermée, afin de réappliquer, au moment du dépassement de la force de réglage, le deuxième bord (31) de l'élément (2) sur son siège de soupape.

2. Régulateur de pression selon la revendication 1, caractérisé en ce que la force de rappel agit sur un diamètre (45) sur la soupape (2) qui est égal au diamètre (44) du deuxième bord (31) de l'élément de soupape coopérant avec le premier siège.

3. Régulateur de pression selon la revendication 1 ou 2, caractérisé en ce que la force de rappel est engendrée au moyen d'une bague d'étanchéité (10) souple qui isole la chambre (7a) du boîtier par rapport à la sortie (18) du boîtier (1) de soupape.

4. Régulateur de pression selon la revendication 3, caractérisé en ce que la bague d'étanchéité (10) de guidage radial de l'élément (2) est située dans la région du premier bord qui entoure l'ouverture de l'élément (2) connectée en permanence à la sortie (18).

5. Régulateur de pression selon l'une des revendications 1 à 4, caractérisé en ce que le deuxième siège de soupape est agencé dans le capot (40) de l'élément de soupape (2), à l'intérieur d'une couronne de lumières (34) qui relie l'espace intérieur (35) de l'élément (2) en permanence à une chambre à l'intérieur du deuxième bord (31) de l'élément de soupape coopérant avec le premier siège de soupape.

6. Régulateur de pression selon l'une des revendications 1 à 5, caractérisé en ce que le premier siège de soupape est formé sur un disque ajouré (4) maintenu dans le logement de soupape (1), dont le trou (22), disposé centralement, est agencé dans l'axe du deuxième siège de soupape, ainsi que du bord (43) de l'organe de réglage (3) coopérant avec le deuxième siège.

7. Régulateur de pression selon la revendication 6, caractérisé en ce que le deuxième siège de soupape est disposé dans le plan perpendiculaire par rapport à l'axe longitudinal de l'élément (2), dans lequel est disposé le deuxième bord (31) de l'élément (2) coopérant avec le premier siège de soupape et que la région entourant le trou (22) du disque ajouré (4) peut être déformée élastiquement pour qu'il soit possible, lorsque l'organe de réglage (3) se rapproche du deuxième siège de soupape, de l'appliquer sur celui-ci en fermant l'ouverture de décharge (30) et pour que, lors d'un mouvement de rappel de l'organe de réglage (3), elle puisse suivre celui-ci en libérant l'ouverture de décharge.

8. Régulateur de pression selon l'une des revendications 2 à 7, caractérisé en ce que la force de rappel s'exerce dans une région conique de transition (37), entre deux sections cylindriques de l'élément (2).

9. Régulateur de pression selon la revendication 4, caractérisé en ce que, pour le guidage radial de l'élément (2) dans la chambre (7a) du boîtier, il est prévu, dans la région du capot (40), des taquets (39) rigides coopérant avec la paroi de la chambre.

10. Régulateur de pression selon l'une des revendications 1 à 9, caractérisé en ce que la chambre (7a) est une partie d'alésage étagé (18, 7b, 7a, 20) du boîtier, dont les sections forment la sortie (18) de l'agent de pression, la chambre (7) divisée en deux parties (7a, 7b) et une partie recevant le capot (5) du boîtier muni de l'ouverture de décharge, les diamètres des sections étant décroissants à partir des deux extrémités de l'alésage.

11. Régulateur de pression selon l'une des revendications 1 à 10, caractérisé en ce que l'ouverture de décharge (30) sert uniquement à l'échappement de l'agent de pression de l'espace intérieur (35) de l'élément (2), tandis que l'agent de pression qui sort de l'utilisateur (19) est évacué par une deuxième ouverture (15) du boîtier de soupape ayant un diamètre sensiblement plus grand.

12. Régulateur de pression selon la revendication 11, caractérisé en ce que l'ouverture d'évacuation (15) est fermée ou libérée au moyen d'un disque-membrane (13) réglable.

13. Régulateur de pression selon la revendication 12, caractérisé en ce que les mouvements de réglage du disque-membrane (13) sont provoqués par l'agent de pression circulant de l'espace intérieur (35) de l'élément de soupape (2) vers l'utilisateur (19) et sortant de l'utilisateur (19).

14. Régulateur de pression selon la revendication 12 ou 13, caractérisé en ce que le disque-membrane (13) coopère avec une collerette (42) entourant l'ouverture d'évacuation de l'agent de pression (15).

15. Régulateur de pression selon l'une des revendications 1 à 10, caractérisé en ce que le diamètre du deuxième bord (31) de l'élément (2) coopérant avec le premier siège de soupape est sensiblement plus grand que le diamètre du bord (43) de l'organe de réglage (3) coopérant avec le deuxième siège de soupape.

16. Régulateur de pression selon l'une des revendications 1 à 15, caractérisé en ce que l'agent de pression est de l'air, le domaine à faible pression étant l'atmosphère.

17. Application d'un régulateur de pression commandé par force selon la revendication 16 au frein à air comprimé de véhicules à moteur.

Fig. 1

Fig. 2

11

EP 0 147 589 B1

Fig.3

Fig. 4

13

# Fig. 5

# Fig.6